# EUROPÄISCHE PATENTSCHRIFT

(11) **EP 1 250 520 B1**
(45) Veröffentlichungstag und Bekanntmachung des Hinweises auf die Patenterteilung: **08.03.2006**
(21) Anmeldenummer: 00985138.7
(22) Anmeldetag: 06.12.2000
(51) Int. Cl.: F01M 11/03, F01M 11/00

(54) **ÖLFILTER FÜR MOTOREN, GETRIEBE ODER AUTOMATIKGETRIEBE**
OIL FILTER FOR ENGINES, TRANSMISSIONS OR AUTOMATIC TRANSMISSIONS
FILTRE A HUILE POUR MOTEURS, BOITES DE VITESSES OU BOITES AUTOMATIQUES

(30) Priorität: 28.01.2000 DE 10003710
(43) Veröffentlichungstag der Anmeldung: 23.10.2002
(73) Patentinhaber: IBS Filtran Kunststoff-/Metallerzeugnisse GmbH, 51597 Morsbach (DE)
(72) Erfinder: ROSENDAHL, Marco, 51674 Wiehl (DE); BEER, Markus, 51597 Morsbach (DE)
(74) Vertreter: Lang, Friedrich
(86) Internationale Anmeldenummer: PCT/EP2000/012248
(87) Internationale Veröffentlichungsnummer: WO 2001/055563

(56) Entgegenhaltungen:
- DE-A- 19 735 444
- US-A- 3 773 144
- US-A- 4 181 611
- US-A- 4 915 852
- US-A- 5 934 241

## Beschreibung

Gegenstand der Erfindung ist ein Ölfilter für Motoren, Getriebe oder Automatikgetriebe, wobei der Ölfilter in eine Ölwanne integriert ist und wobei an dem Ölfilter mindestens ein Bypass Ventil angeordnet ist.

Aus dem Stand der Technik sind bereits verschiedene Arten von Ölfiltern für Motoren und Getriebe oder Automatikgetriebe bekannt. Die bekannten Filter bestehen im allgemeinen aus einem flachen Filtergehäuse aus zwei Halbschalen. Zwischen diesen beiden Halbschalen ist ein scheibenförmiges oder als Tasche geformtes oder ein faltenförmiges Filtermedium, beispielsweise ein Metallsieb, ein Papierfilter oder ein Polyesterfilterfilz befestigt. Die luftdicht miteinander verbundenen Filterhalbschalen können weiter aus Metallen oder Kunststoff oder einer Kombination aus Kunststoffschale oder Metallschale sein.

Die Filter werden in den unterschiedlichsten Freiräumen im Getriebe oder im Motorraum angebracht. So beschreiben beispielsweise die deutschen Patente 197 35 444.0 und 197 35 445.9 sowie die nicht vorveröffentlichte deutsche Patentanmeldung 199 55 636.9 des Anmelders eine Ölwanne und einen Ölfiltereinsatz für Ölwannen für Motoren und Getriebe, wobei der Ölfilter innerhalb der Ölwanne angeordnet wird.

Die Problematik bei Saugölfiltem, bei denen ein flaches, plattenförmiges oder als Tasche ausgebildetes Filtermedium verwendet wird, ist die schlechte Fließeigenschaft des Öls bei niedrigen Temperaturen oder, daß der Druckverlust über dem Filter zu hoch wird. Dadurch entstehen für die Pumpe zu hohe Saugdrücke, die zu Pumpenkavitation, Schalt- oder Funktionsproblemen des Getriebes oder Motors führt. Zur Lösung dieses Problems wird im Stand der Technik ein Bypass-Ventil als Umgehungsventil zur Verringerung des Saugdruckes in dem Ölfilter angeordnet. Herkömmliche Bypass-Ventile weisen bei jeder Temperatur stets den gleichen Öffnungsdruck auf, was im Bereich höherer Temperaturen mitunter zu einem unerwünschten unfiltrierten Ölstrom führt.

Auch der Einsatz von Bypass-Ventilen in Druckölfiltem in Motoren und Automatikgetrieben hat zum Ziel auf der Druckseite der Pumpe einen Mindestölfluß zu garantieren. Im Stand der Technik konzentrieren sich alle Auslegungen von Bypass-Ventilen auf den Kaltöltemperaturbereich, oder wenn der Druckverlust über dem Filter zu hoch ist, da die Fließeigenschaften in den verwendeten Filtersystemen aufgrund der schlechten Viskositätseigenschaften der verwendeten Öle automatisch drastisch abnehmen. Das Problem der herkömmlichen Ventile ist es hierbei, den Öffnungsbereich bzw. den Öffnungsdruck für das Bypass-Ventil für den Niedrigtemperäturbereich so auszulegen, ohne daß ein Öffnen des Bypass-Ventils bei Normalbelastungen im Warmbereich erfolgt. So ist zudem nachteilig, daß ein Bypass-Ventil in geöffnetem Zustand aufgrund der herrschenden Hauptumströmung mitunter schlecht und ungenau wieder schließt, auch wenn der höhere Temperaturbereich bereits erreicht ist. Dies führt zu einem unerwünschten unfiltrierten Ölstrom im Warm- und Heißbereich des Öles.

Das europäische Patent 0 023 491 beschreibt ein Temperatur- und Differenzdruckventil für einen Flüssigkeitsfilter mit einem temperaturabhängigen Verstellorgan, das das Bypass-Ventil temperaturabhängig öffnet und verschließt. Bei dem temperaturabhängigen Verstellorgan handelt es sich um ein Mittel aus einem Material, das sich bei Temperaturerhöhung ausdehnt.

Der Nachteil dieser Konstruktion des Standes der Technik ist die hohe Anzahl der benötigten Bauteile und die damit verbundene aufwendige teure Konstruktion und die Störanfälligkeit.

Daher war es die technische Aufgabe der vorliegenden Erfindung, einen Ölfilter bereitzustellen, der die Nachteile des Standes der Technik vermeidet Insbesondere soll bei niedrigen Temperaturen, wenn das Öl eine hohe Viskosität aufweist ein Mindestöffluß garantiert werden, während bei höheren Temperaturen ein unfiltrierter Ölstrom drastisch minimiert werden soll. Weiterhin soll die Konstruktion weniger aufwendig und damit kostengünstiger und weniger störanfällig sein.

Diese technische Aufgabe wird gelöst durch einen Ölfilter für Motoren, Getriebe oder Automatikgetriebe, wobei der Ölfilter in eine Ölwanne integriert ist, wobei an dem Ölfilter mindestens ein Bypass-Ventil 9 angeordnet ist, wobei das Bypass-Ventil 9 eine Feder 11 enthält, deren Federkraft mit zunehmender Temperatur zunimmt und wobei die Feder 11 über Verschlußmittel 12 eine Öffnung 15 des Bypass-Ventils 9 öffnet und verschließt.

Der Vorteil des erfindungsgemäßen Ölfilters ist, daß die schlechte Fließeigenschaft des Öls bei niedrigen Temperaturen und die dadurch entstehenden hohen Drücke im Filterelement durch das Bypass-Ventil kompensiert werden. Damit werden Pumpenkavitation, Schalt- oder Funktionsprobleme minimiert. Die Feder des Bypass-Ventils besteht aus einem Material, das bewirkt, daß die Feder ihre Federkraft abhängig von der Temperatur verändert. Die Feder weist daher bei kalten Öltemperaturen eine geringere Federkraft auf als bei warmen Öltemperaturen. Dies bedeutet, daß im Kaltbereich die Feder weich und im Warmbereich hart ist. Hierbei kann die Federkraft sowie der Temperaturbereich je nach Funktionsanforderung optimal eingestellt und auf die benötigten Bedingungen im Hydraulikkreislauf abgestimmt werden. Im Kaltölbereich kann daher das Öffnen des Bypass-Ventils eindeutig und wesentlich genauer definiert werden. Weiterhin wird das Öffnen des Bypass-Ventüs im Warnibereich wesentlich erschwert. Die erfindungsgemäße Vorrichtung macht es möglich, daß mit einer Bypass-Ventilauslegung zwei stark unterschiedliche Bypass-Ventilöffnungsdrücke und somit zwei unterschiedliche Funktionen erzeugt werden können. Besonders vorteilhaft bei dem erfindungsgemäßen Ölfilter ist die einfache, kostengünstigere, kaum störanfällige und damit wartungsfreie Bauweise.

In einer bevorzugten Ausführungsform umfaßt der Ölfilter ein Ölfiltergehäuse 1 mit einer Ölfilteroberschale 2 und einer Ölfilterunterschale 3, wobei zwischen der Ölfilteroberschale 2 und der Ölfilterunterschale 3 ein Ölfiltermedium 4 angeordnet ist und wobei oberhalb des Ölfiltermediums 4 ein oberer Fließraum 5 und unterhalb des Ölfiltermediums 4 ein unterer Fließraum 6 angeordnet ist, wobei die Ölfilterunterschale 3 eine Öffnung 7 besitzt und die Ölfilteroberschale 2 eine Öffnung 8 besitzt und wobei die Öffnung 15 des Bypass-Ventils 9 die Verbindung des oberen Fließraumes 5 nach außen darstellt.

In einer weiteren besonders bevorzugten Ausführungsform ist die Feder 11 des Bypass-Ventils 9 innerhalb eines Bypass-Ventilgehäuses 10 zwischen einem Bypass-Ventilgehäusedeckel 13 und einem Verschlußmittel 12 angeordnet. Diese einfache Auslegung des Bypass-Ventils sichert ein langes und wartungsfreies Funktionieren.

In einer bevorzugten Ausführungsform nimmt die Federkraft der Feder 11 bei zunehmender Temperatur zu und verschließt dabei die Öffnung 15 des Bypass-Ventils 9 mit dem Verschlußmittel 12. Die Federkraft der Feder 11 nimmt bei abnehmender Temperatur ab und öffnet dabei leichter die Öffnung 15 des Bypass-Ventils mit dem Verschlußmittel 12.

Vorzugsweise ist das Verschlußmittel 12 ein Verschlußdeckel. In einer bevorzugten Ausführungsform bildet der Ölfilter einen Einsatz für Ölwannen. In einer weiteren bevorzugten Ausführungsform wird die Ölfilterunterschale 3 von Teilen der Ölwanne gebildet.

In einer weiteren besonders bevorzugten Ausführungsform ist der Ölfilter ein Saugölfilter. Dabei ist die Öffnung 7 der Ölfilterunterschale 3 ein Öleinlaß und die Öffnung 8 der Ölfilteroberschale 2 ein Ölauslaß.

In einer alternativen Ausführungsform ist der Ölfilter ein Druckölfilter. Dabei ist die Öffnung 7 der Ölfilterunterschale 3 ein Ölauslaß und die Öffnung 8 der Ölfilteroberschale 2 ein Öleinlaß.

In einer bevorzugten Ausführungsform besteht die Feder 11 aus einer Formgedächtnislegierung. Formgedächtnislegierungen sind metallische Werkstoffe deren mechanische Eigenschaften durch Temperatureinfluß in einem weiten Bereich veränderbar sind. Der Effekt besteht darin, daß ein Bauteil aus einer Formgedächtnislegierung, zum Beispiel ein Stück Draht, nach einer plastischen Verformung durch bloßes Erwärmen seine ursprüngliche Form wieder annimmt. Formgedächtnislegierungen treten temperaturabhängig in zwei verschiedenen Phasen auf, in denen sie völlig andere Eigenschaften besitzen. Der Formgedächtniseffekt ist die Folge einer kristallographischen, reversiblen, martensitischen Phasenumwandlung im festen Zustand. Die Phase bei höherer Temperatur wird als Austenit, die bei niedrigerer Temperatur als Martensit bezeichnet. Der Martensit ist durch leicht gegeneinander verschiebbare Grenzflächen verformbar. Bei Erwärmung des verformten Martensits über die Umwandlungstemperatur hinaus wandelt sich die verformte Martensitstruktur in das ursprüngliche Austenitgitter um. Das Bauteil nimmt seine ursprüngliche Gestalt wieder an.

In einer weiteren besonders bevorzugten Ausführungsform erfolgt die kristallographische, reversible, martensitische Phasenumwandlung bei einer Änderung der Temperatur innerhalb eines Bereiches zwischen -30 °C und +30 °C. Die Federkraft der Feder ändert sich in diesem Temperaturbereich bis etwa 80 %, da sich die Viskosität der verwendeten Öle bei Temperaturen über 30 °C nur noch geringfügig ändert.

Besonders bevorzugt besteht die Formgedächtnislegierung der Feder 11, ausgewählt aus der Gruppe NiTi, CuZnAl oder CuAlNi.

Vorzugsweise ändert sich die Federkraft der Feder 11 innerhalb eines Bereiches von 0,1 N und 120 N. In einer bevorzugten Ausführungsform beträgt die Federkraft der Feder 11 bei Saugölfiltem bei Temperaturen größer 30 °C zwischen 10 und 30 N. Bei Druckölfiltem beträgt die Federkraft bei Temperaturen größer 30 °C zwischen 30 N bis 100 N.

In den folgenden Figuren soll der Gegenstand der Erfindung näher erläutert werden.
- Figur 1: zeigt ein Ansicht des erfindungsgemäßen Ölfilters im Querschnitt
- Figur 2: zeigt eine Ausschnittsansicht des Bypass-Ventils 9 des erfindungsgemäßen Druckölfilters.

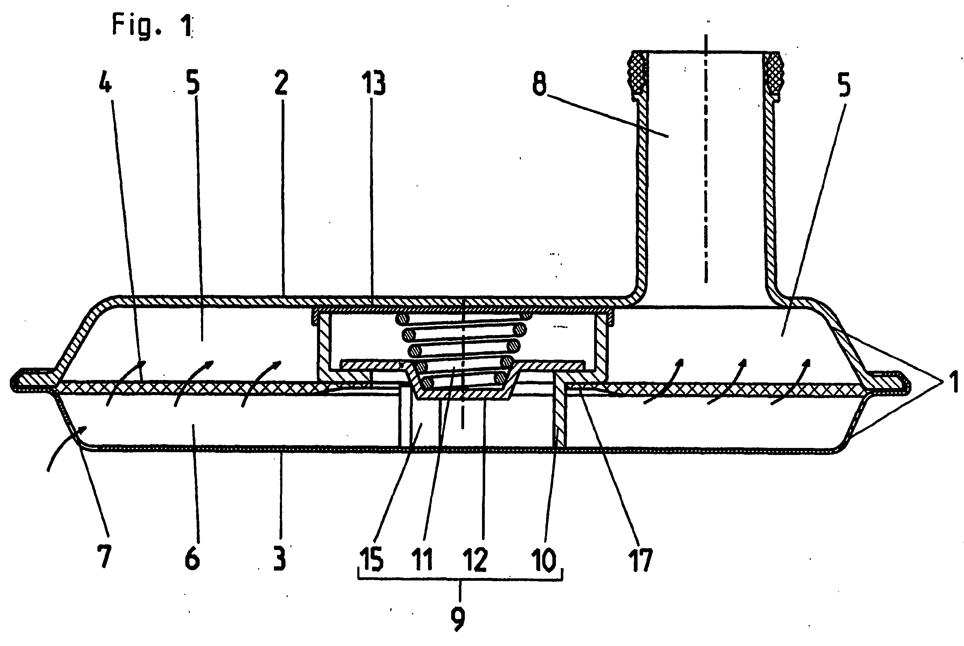

Figur 1 zeigt ein Ansicht des erfindungsgemäßen Ölfilters im Querschnitt. Bei der Darstellung handelt es sich um einen Saugölfilter, der vom Ölfiltergehäuse 1 nach außen hin begrenzt wird. Innerhalb des Ölfiltergehäuses ist ein Ölfiltermedium 4 angeordnet. Oberhalb des Filtermediums 4 ist ein oberer Fließraum 5 und ein weiterer Fließraum 6 unterhalb des Ölfiltermediums 4 angeordnet. Das Bypass-Ventit 9 besteht in dieser Ausführungsform aus einem Bypass-Ventilgehäuse 10, einem Bypass-Ventilgehäusedeckel 13, einer Feder 11 und einem Verschlußdekkel 12. Dabei ist die Feder 11 zwischen dem Bypass-Ventilgehäusedeckei 13 und dem Verschlußdeckel 12 angeordnet. Der Verschlußdeckel 12 wird von der Feder 11 so in die Öffnung 15 des Bypass-Ventils gedrückt, daß diese verschlossen wird. Dabei sind die Federn aus Formgedächtnislegierungen gefertigt. Im Normalbetrieb gelangt das Öl durch die Öffnung der Ölfilterunterschale 7 (Öleinlaß) in den unteren Fließraum 6. Von dort fließt das Öl durch das Filtermedium 4 in den oberen Fließraum 5 und gelangt von dort zur Öffnung der Ölfilteroberschale 8 (Ölfilterauslaß) zur Pumpe. Bei niedrigen Temperaturen ist die Federkraft der Feder 11 gering und die Viskosität des Öls hoch. Bei entsprechendem Saugöldruck ist daher die Öffnung des Bypass-Ventils geöffnet und das Öl gelangt über die Öffnung 15 unter Umgehung des Ölfiltermediums 4 direkt in den oberen Fließraum 5 und von dort über die Öffnung 8 der Ölfilteroberschale zur Pumpe. Bei höheren Temperaturen ist die Federkraft der Feder 11 sehr viel höher. Daher bleibt die Öffnung 15 des Bypass-Ventils 9 geschlossen. Bei höheren Temperaturen ist auch die Viskosität des Öls niedriger, so daß 100 % des Ölvolumenstromes über das Ölfiltermedium 4 verläuft, um zum oberen Fließraum 5 des Ölfilters zu gelangen.

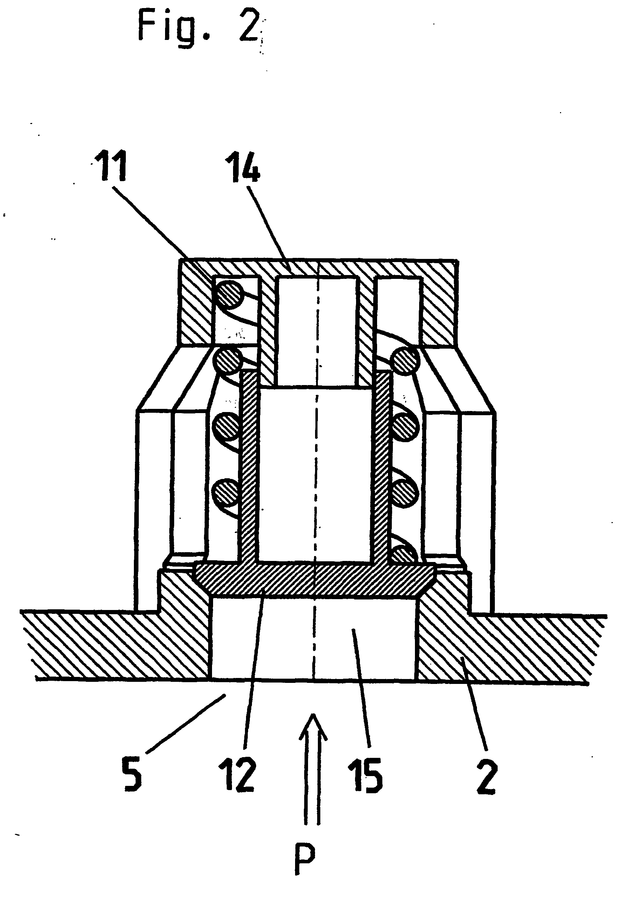

Figur 2 zeigt eine Ausschnittsansicht des Bypass-Ventil 9 des efindungsgemäßen Druckölfilters. Im Druckölfilter ist das Bypass-Ventil 9 in der Ölfifteroberschale 2 angeordnet. Das Bypass-Ventil 9 besteht aus einem Bypass-Ventilgehäuse mit der Aufnahme 14, dem Verschlußmittel 12 (einem Verschlußdeckel) und der Feder 11. Das Bypass-Ventilgehäuse 14 ist über Verstrebungen mit der Ölfilteroberschale 2 verbunden. Unter Kontrolle der Feder 11 ist das Verschlußmittel 12 über eine angeordnete Führung gegen die Aufnahme des Bypass-Ventilgehäuses verschiebbar. Dabei kann die Öffnung 15 des Bypass-Ventils geöffnet und geschlossen werden. Bei niedrigen Temperaturen, wenn das Öl hoch viskos ist und die Feder eine geringe Federkraft besitzt, öffnet sich das Ventil und das Öl gelangt von dem oberen Fließraum 5 durch die Öffnung des Bypass-Ventits 15 unter Umgehung des Ölfittermediums (nicht gezeigt) nach außen.

### Bezugszeichenliste

- 1: Ölfiltergehäuse
- 2: Ölfilteroberschale
- 3: Ölfilterunterschale
- 4: Ölfiltermedium
- 5: oberer Fließraum
- 6: unterer Fließraum
- 7: Öffnung der Ölfilterunterschale
- 8: Öffnung der Ölfilteroberschale
- 9: Bypass-Ventil
- 10: Bypass-Ventilgehäuse
- 11: Feder
- 12: Verschlußmittel
- 13: Bypass-Ventilgehäusedeckel
- 14: Bypass-Ventilgehäuse mit Aufnahme
- 15: Öffnung des Bypass-Ventils
- 17: Verbindung Bypass-Ventilgehäuse mit Ölfiltermedium

## Patentansprüche

1. Ölfilter für Motoren, Getriebe oder Automatikgetriebe, wobei der Ölfilter in eine Ölwanne integriert ist, wobei an dem Ölfilter mindestens ein Bypass-Ventil (9) angeordnet ist, wobei das Bypass-Ventil (9) eine Feder (11) enthält, deren Federkraft mit zunehmender Temperatur zunimmt und wobei die Feder (11) über Verschlußmittel (12) eine Öffnung (15) des Bypass-Ventils (9) öffnet und verschließt.

2. Ölfilter nach Anspruch 1, **dadurch gekennzeichnet, daß** der Ölfilter umfaßt ein Ölfiltergehäuse (1) mit einer Ölfilteroberschale (2) und einer Ölfilterunterschale (3), wobei zwischen der Ölfilteroberschale (2) und der Ölfilterunterschale (3) ein Ölfiltermedium (4) angeordnet ist, mit einem oberhalb des Ölfiltermediums (4) angeordneten oberen Fließraum (5) und einem unterhalb des Ölfiltermediums (4) angeordneten unteren Fließraum (6), wobei die Ölfilterunterschale (3) eine Öffnung (7) besitzt und die Ölfilteroberschale (2) eine Öffnung (8) besitzt und wobei die Öffnung (15) des Bypass-Ventils (9) die Verbindung des oberen Fließraumes (5) nach außen darstellt.

3. Ölfilter nach Anspruch 1 oder 2, **dadurch gekennzeichnet, daß** die Feder (11) des Bypass-Ventils (9) innerhalb eines Bypass-Ventilgehäuses (10) zwischen einem Bypass-Ventilgehäusedeckel (13) und einem Verschlußmittel (12) angeordnet ist.

4. Ölfilter nach den Ansprüchen 1 bis 3, **dadurch gekennzeichnet, daß** die Federkraft der Feder (11) bei zunehmender Temperatur zunimmt und dabei die Öffnung (15) des Bypass-Ventils (9) mit dem Verschlußmittel (12) verschließt und die Federkraft der Feder (11) bei abnehmender Temperatur abnimmt und dabei die Öffnung (15) des Bypass-Ventils (9) mit dem Verschlußmittel (12) öffnet.

5. Ölfilter nach den Ansprüchen 1 bis 4, **dadurch gekennzeichnet, daß** das Verschlußmittel (12) ein Verschlußdeckel ist.

6. Ölfilter nach den Ansprüchen 1 bis 5, **dadurch gekennzeichnet, daß** der Ölfilter einen Einsatz für Ölwannen bildet.

7. Ölfilter nach den Ansprüchen 1 bis 5, **dadurch gekennzeichnet, daß** die Ölfilterunterschale (3) von Teilen der Ölwanne gebildet wird.

8. Ölfilter nach den Ansprüchen 1 bis 7, **dadurch gekennzeichnet, daß** der Ölfilter ein Saugölfilter ist.

9. Ölfilter nach Anspruch 8, **dadurch gekennzeichnet, daß** die Öffnung (7) der Ölfilterunterschale (3) ein Öleinlaß ist, und die Öffnung (8) der Ölfilteroberschale (2) ein Ölauslaß ist.

10. Ölfilter nach den Ansprüchen 1 bis 7, **dadurch gekennzeichnet, daß** der Ölfilter ein Druckölfilter ist.

11. Ölfilter nach Anspruch 10, **dadurch gekennzeichnet, daß** die Öffnung (7) der Ölfilterunterschale (3) ein Ölauslaß ist, und die Öffnung (8) der Ölfilteroberschale (2) ein Öleinlaß ist.

12. Ölfilter nach den Ansprüchen 1 bis 11, **dadurch gekennzeichnet, daß** die Feder (11) aus einer Formgedächtnislegierung besteht.

13. Ölfilter nach Anspruch 12, **dadurch gekennzeichnet, daß** die Formgedächtnislegierung im festen Zustand eine kristallographische reversible martensitische Phasenumwandlung erfährt, wobei die Formgedächtnislegierung bei einer Änderung der Temperatur zwischen der martensitischen Phase bei niedrigerer Temperatur und der austenitischen Phase bei höherer Temperatur wechselt.

14. Ölfilter nach Anspruch 12 oder 13, **dadurch gekennzeichnet, daß** die kristallographische reversible martensitische Phasenumwandlung bei einer Änderung der Temperatur innerhalb eines Bereiches zwischen -30°C und +30 °C erfolgt.

15. Ölfilter nach den Ansprüchen 12 bis 14, **dadurch gekennzeichnet, daß** die Formgedächtnislegierung der Feder (11) ausgewählt ist aus der Gruppe Ni-Ti, CuZnAl, CuAlNi.

16. Ölfilter nach Anspruch 12 bis 15, **dadurch gekennzeichnet, daß** die Federkraft der Feder (11) sich innerhalb eines Bereiches von 0,1 N und 120 N ändert.

17. Ölfilter nach Anspruch 12 bis 16, **dadurch gekennzeichnet, daß** die Federkraft der Feder (11) bei Saugölfiltem bei Temperaturen größer 30 °C zwischen 10 und 30 N beträgt, und bei Druckölfiltern bei Temperaturen größer 30 °C zwischen 30 N bis 100 N beträgt.

## Claims

1. An oil filter for engines, transmissions or automatic transmissions, with the oil filter being integrated in an oil pan, with at least one bypass valve (9) being arranged on the oil filter, with the bypass valve (9) comprising a spring (11) whose spring power increases with rising temperature, and with the spring (11) opening and closing an opening (15) of the bypass valve (9) by locking means (12).

2. An oil filter according to claim 1,
**characterized in that**
the oil filter comprises an oil filter housing (1) with an upper oil filter shell (2) and an lower oil filter shell (3), with an oil filter medium (4) being disposed between the upper oil filter shell (2) and the lower oil filter shell (3), with an upper flow chamber (5) arranged above the oil filter medium (4) and a lower flow chamber (6) disposed beneath the oil filter medium (4), with the lower oil filter shell (3) comprising an opening (7) and the upper oil filter shell (2) comprising an opening (8), and with the opening (15) of the bypass valve (9) representing the connection of the upper flow chamber (5) to the outside.

3. An oil filter according to claim 1 or 2,
**characterized in that**
the spring (11) of the bypass valve (9) is arranged within a bypass valve housing (10) between a bypass valve housing cover (13) and a locking means (12).

4. An oil filter according to the claims 1 to 3,
**characterized in that**
the spring power of the spring (11) increases with rising temperature and thus closes the opening (15) of the bypass valve (9) with the locking means (12), and the spring power of the spring (11) decreases with decreasing temperature and thus opens the opening (15) of the bypass valve (9) with the locking means (12).

5. An oil filter according to the claims 1 to 4,
**characterized in that**
the locking means (12) is a sealing cover.

6. An oil filter according to the claims 1 to 5,
**characterized in that**
the oil filter forms an insert for oil pans.

7. An oil filter according to the claims 1 to 5,
**characterized in that**
the lower oil filter shell (3) is formed by parts of the oil pan.

8. An oil filter according to the claims 1 to 7,
**characterized in that**
the oil filter is a suction oil filter.

9. An oil filter according to claim 8,
**characterized in that**
the opening (7) of the lower oil filter shell (3) is an oil inlet and the opening (8) of the upper oil filter shell (2) is an oil outlet.

10. An oil filter according to the claims 1 to 7,
**characterized in that**
the oil filter is a pressure oil filter.

11. An oil filter according to claim 10,
**characterized in that**
the opening (7) of the lower oil filter shell (3) is an oil outlet and the opening (8) of the upper oil filter shell (2) is an oil inlet.

12. An oil filter according to the claims 1 to 11,
**characterized in that**
the spring (11) consists of a shape memory alloy.

13. An oil filter according to claim 12,
**characterized in that**
the shape memory alloy is subjected in the solid state to a crystallographically reversible martensitic phase transformation, with the shape memory alloy changing at a change of temperature between the martensitic phase at a lower temperature and the austenitic phase at higher temperature.

14. An oil filter according to claim 12 or 13,
**characterized in that**
the crystallographically reversible martensitic phase transformation occurs at a change of temperature within the region of between -30°C and +30°C.

15. An oil filter according to the claims 12 to 14,
**characterized in that**
the shape memory alloy of the spring (11) is chosen from the group of NiTi, CuZnAl, CuAlNi.

16. An oil filter according to claim 12 to 15,
**characterized in that**
the spring power of the spring (11) changes within a range of 0.1 N and 120 N.

17. An oil filter according to claim 12 to 16,
**characterized in that**
the spring power of the spring (11) is between 10 and 30 N for suction oil filters at temperatures of higher than 30°C and between 30 N to 100 N for pressure oil filters at temperatures of higher than 30°C.

## Revendications

1. Filtre à huile pour moteur, boîtes de vitesses ou boîtes automatiques, le filtre à huile étant intégré dans un carter d'huile, au moins une vanne de dérivation (9) étant placée sur le filtre à huile, la vanne de dérivation (9) contenant un ressort (11) dont la force augmente avec la température et le ressort (11) ouvrant et fermant une ouverture (15) de la vanne de dérivation (9) par l'intermédiaire de moyens de fermeture (12).

2. Filtre à huile selon la revendication 1, **caractérisé en ce que** le filtre à huile comprend un boîtier de filtre à huile (1) avec une coque supérieure de filtre à huile (2) et une coque inférieure de filtre à huile (3), un milieu filtrant (4) état placé entre la coque supérieure (2) et la coque inférieure (3), avec une chambre d'écoulement supérieure (5) placée au-dessus du milieu filtrant (4) et une chambre d'écoulement inférieure (6) placée au-dessous du milieu filtrant (4), la coque inférieure (3) possédant une ouverture (7) et la coque supérieure (2) possédant une ouverture (8), et l'ouverture (15) de la vanne de dérivation (9) établissant la liaison entre la chambre d'écoulement supérieure (5) et l'extérieur.

3. Filtre à huile selon la revendication 1 ou 2 **caractérisé en ce que** le ressort (11) de la vanne de dérivation (9) est placé dans un boîtier de vanne de dérivation (10) entre un couvercle de boîtier de vanne de dérivation (13) et un moyen de fermeture (12).

4. Filtre à huile selon l'une des revendications 1 à 3, **caractérisé en ce que** la force du ressort (11) augmente avec la température et ferme ainsi l'ouverture (15) de la vanne de dérivation (9) avec le moyen de fermeture (12), et la force du ressort (11) diminue pour une température décroissante et ouvre ainsi l'ouverture (15) de la vanne de dérivation (9) avec le moyen de fermeture (12).

5. Filtre à huile selon l'une des revendications 1 à 4, **caractérisé en ce que** le moyen de fermeture (12) est un couvercle de fermeture.

6. Filtre à huile selon l'une des revendications 1 à 5, **caractérisé en ce que** le filtre à huile forme un insert pour des carters d'huile.

7. Filtre à huile selon l'une des revendications 1 à 5, **caractérisé en ce que** la coque inférieure (3) du filtre à huile est formée par des parties du carter d'huile.

8. Filtre à huile selon l'une des revendications 1 à 7, **caractérisé en ce que** le filtre à huile est un filtre à huile à aspiration.

9. Filtre à huile selon la revendication 8, **caractérisé en ce que** l'ouverture (7) de la coque inférieure (3) du filtre à huile est une entrée d'huile, et l'ouverture (8) de la coque supérieure (2) du filtre à huile est une sortie d'huile.

10. Filtre à huile selon l'une des revendications 1 à 7, **caractérisé en ce que** le filtre à huile est un filtre à huile sous pression.

11. Filtre à huile selon la revendication 10, **caractérisé en ce que** l'ouverture (7) de la coque inférieure (3) du filtre à huile est une sortie d'huile, et l'ouverture (8) de la coque supérieure (2) du filtre à huile est une entrée d'huile.

12. Filtre à huile selon l'une des revendications 1 à 11, **caractérisé en ce que** le ressort (11) est composé d'un alliage à mémoire de forme.

13. Filtre à huile selon la revendication 12, **caractérisé en ce que** l'alliage à mémoire de forme subit à l'état solide une transformation de phase cristallographique martensitique réversible, l'alliage à mémoire de forme changeant en cas de variation de la température entre la phase martensitique à basse température et la phase austénitique à haute température.

14. Filtre à huile selon la revendication 12 ou 13, **caractérisé en ce que** la transformation de phase cristallographique martensitique réversible se produit pour une variation de la température sur un plage comprise entre -30°C et +30°C.

15. Filtre à huile selon l'une des revendications 12 à 14, **caractérisé en ce que** l'alliage à mémoire de forme du ressort (11) est choisi parmi le groupe NiTi, CuZnAl, CuAlNi.

16. Filtre à huile selon l'une des revendications 12 à 15, **caractérisé en ce que** la force du ressort (11) varie sur une plage comprise entre 0,1 N et 120 N.

17. Filtre à huile selon l'une des revendications 12 à 16, **caractérisé en ce que** la force du ressort (11) vaut pour les filtres à huile à aspiration entre 10 et 30 N aux températures supérieures à 30 °C, et pour les filtres à huile sous pression entre 30 N et 100 N aux températures supérieures à 30 °C.
